# EUROPEAN PATENT SPECIFICATION

(11) **EP 1 984 636 B1**
(45) Date of publication and mention of the grant of the patent: **18.08.2010**
(21) Application number: 07762899.8
(22) Date of filing: 01.02.2007
(51) Int. Cl.: B62D 21/00, B62D 21/09

(54) **FRAME RAIL**
LÄNGSTRÄGER
CADRE DE RAILS

(30) Priority: 01.02.2006 US 764045 P
(43) Date of publication of application: 29.10.2008
(73) Proprietor: AM General LLC, South Bend IN 46634 (US)
(72) Inventor: RUEHL, Phillip, C., Elm Grove, WI 53122-1627 (US)
(74) Representative: Klunker . Schmitt-Nilson . Hirsch
(86) International application number: PCT/US2007/061452
(87) International publication number: WO 2007/090187

(56) References cited:
- EP-A2- 1 055 829
- WO-A-2006/045194
- US-A- 2 327 585
- US-A- 4 863 214
- US-B1- 7 201 398

## Description

### Background of the Invention

### Field of the Invention

The present invention relates generally to the field of frames. In particular, the present invention relates to the use of frame rails including a spacer. The frame rails may be employed in numerous applications, such as automotive vehicles, for example.

### Description of the Prior Art

U.S. Patent No. 2,327,585 discloses a Bolt Spacer or Reinforcing Member. In particular, the patent pertains to a means for installing bolt spacers and reinforcing members in a structural member having a channel or box cross-section. The patent teaches a structural member comprising three elements. These elements include a first element, a second element and a third element. The first element includes a channel member, formed from metal, comprising a first panel member. The second element includes a second panel member. The third element comprises flanges and a plurality of sockets. The first element is attached to the second element. In addition, the sockets of the third element are preferably formed in the side of the element by di-pressing. The sockets receive multiple reinforcing elements comprising open seam tubular spacers of equal length. The reinforcing elements also include a longitudinal bore sized to receive a bolt. The bolt, in combination with a nut, holds the three elements together.

U.S. Patent 4,863,214 discloses a Spacer Tube Matrix. The spacer tube matrix is intended for use within a vehicle frame having a box beam construction. The spacer tube matrix ensures that a plurality of spacer tubes remain in alignment with apertures present within the side walls of the box beam construction. The spacer tubes allow the bolts passing through the apertures to apply a substantial clamping force when holding the members of the frame together or affixing vehicle parts to the frame.

U.S. Patent No. 6,309,157 discloses a Screw with Sleeve. The disclosed screw-sleeve element includes a screw comprising a shaft and a threaded region. The shaft has a smaller diameter than the diameter of the outer portion of the threaded region. In addition, the patent discloses a sleeve to be used in conjunction with the screw. The sleeve has a substantially cylindrical shape and includes a narrow portion having a diameter smaller than the remainder of the sleeve. The narrow portion diameter is smaller than the outer diameter of the threaded region of the screw. This configuration allows the sleeve to encompass the screw in a non-releasable fashion.

WO 2006/045194 A1 discloses a frame rail assembly according to the preamble of claim 1, for a motor vehicle including a tubular frame and a support tube. The tubular frame includes a first portion connected to a second portion. The first and second portions define a hollow cavity therebetween. A support tube is positioned within the hollow cavity between the first and second portions. The support tube has an exterior surface. The first and second portions include first and second indents respectively formed therein. The first and second indents engage the exterior surface of the support tube to secure the support tube between the first and second portions.

It is object of the invention to improve the existing frame rail assemblies. This object is solved by the assembly of claim 1.

### Summary of the Invention

Embodiments of the invention comprise a frame rail assembly including a first rail portion and a second rail portion. The first and second rail portions each include at least one aperture encompassed by a boss. The frame rail assembly also includes a spacer disposed intermediate the first rail portion and the second rail portion. In embodiments of the invention, the spacer is configured to receive the bosses of the rail portions.

In embodiments of the invention, the frame rail assembly may further include a bolt assembly capable of retaining the first rail portion in a fixed position relative to the second rail portion. A portion of the bolt assembly may extend into an aperture present within the rail portions. The spacer is configured to guide a portion of the bolt assembly through the apertures. In embodiments of the invention, the spacer includes at least one dimple, and in embodiments of the invention, the spacer may include three dimples spaced equidistant apart.

In embodiments of the invention, the first rail portion may include a bight or back portion, a first portion and a second portion. The bight or back portion may include at least one aperture. In embodiments of the invention, the second rail portion may have an identical configuration to the first rail portion.

### Brief Description of the Drawings

These and other features of the invention will become more apparent and the present invention will be better understood upon consideration of the following description and the accompanying drawings, wherein:
Figure 1 is a perspective view of a portion of a frame rail assembly comprising an embodiment of the present invention;
Figure 2 is an exploded perspective view of the embodiment of the invention depicted in Figure 1;
Figure 3 is a perspective view of an embodiment of a rail portion that may be utilized in the embodiment of the invention depicted in Figure 1;
Figure 4 is a section view of the component depicted in Figure 3 taken along section line 4-4;
Figure 5 is a perspective view of an embodiment of a spacer that may be utilized in the embodiment of the invention depicted in Figure 1;
Figure 6 is an end view of the spacer depicted in Figure 5; and
Figure 7 is a section view of the embodiment of the frame rail assembly depicted in Figure 1 taken along section line 7-7.

Corresponding reference characters indicate corresponding parts throughout the several views. The exemplification set out herein illustrates one preferred embodiment of the invention, in one form, and such exemplification is not to be construed as limiting the scope of the invention in any manner.

### Detailed Description of the Preferred Embodiments of the Invention

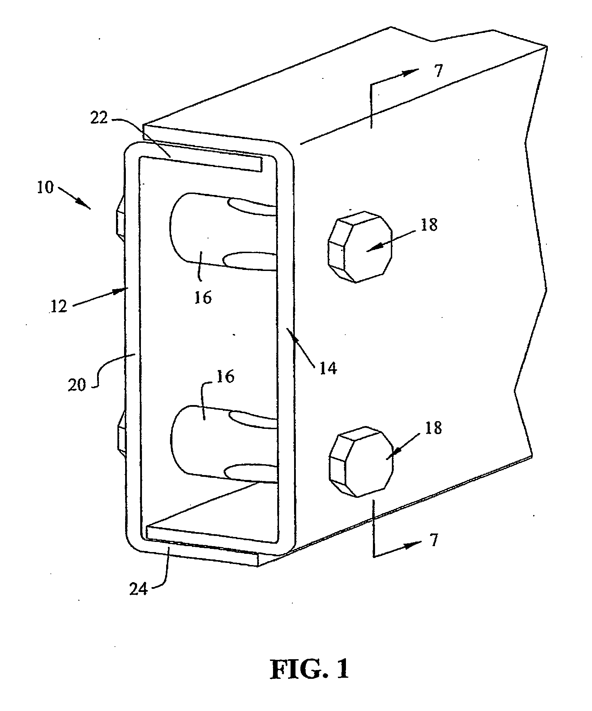

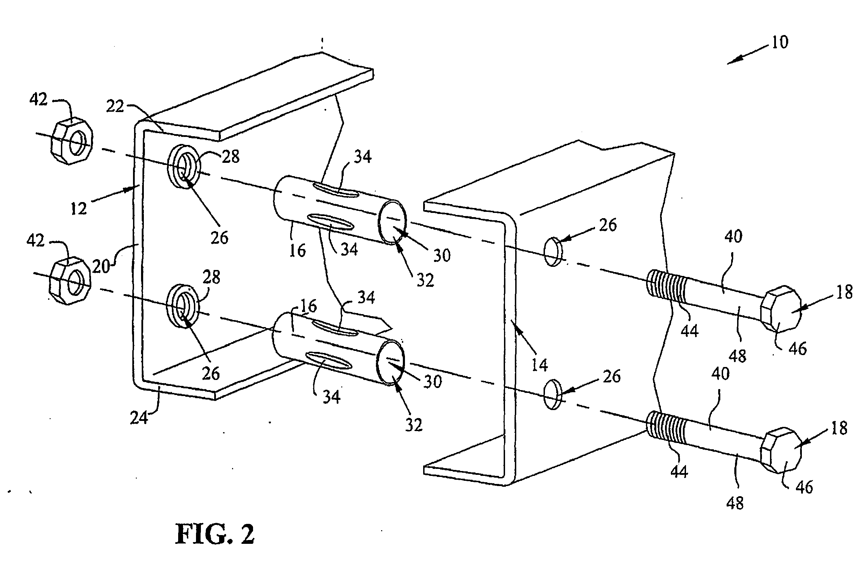

Referring first to Figures 1 and 2, numeral 10 generally indicates a portion of a frame rail assembly. In the present embodiment, the frame rail assembly 10 includes a first rail portion 12, a second rail portion 14, a plurality of spacers, each indicated by numeral 16, and a plurality of bolt assemblies, each indicated by numeral 18. In the present embodiment, first rail portion 12 and second rail portion 14 may be formed from any suitable material, such as metal, for example.

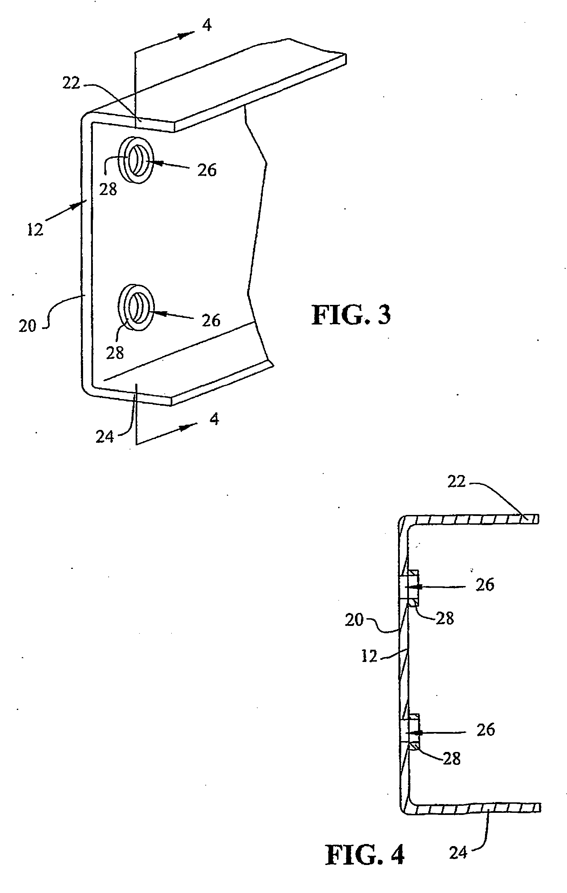

Figure 3 depicts a perspective view of first rail portion 12. In the embodiment depicted, first rail portion 12 comprises a bight or back portion 20, a first portion 22 and a second portion 24. As depicted, first portion 22 and second portion 24 are parallel and extend perpendicularly away from portion 20. The depicted arrangement results in a generally "C" shaped cross-section of first rail portion 12. It should be noted that in the depicted embodiment, portions 20, 22, 24 are integrally formed. In embodiments of the invention, the portions 20, 22, 24 may be formed separately of separate components and affixed together in any suitable manner.

Portion 20 includes a plurality of apertures, each generally indicated by numeral 26. As shown in Figures 3 and 4, portion 20 further includes a plurality of bosses 28, each encompassing an aperture 26. In the depicted embodiment, bosses 28 extend outward from portion 20 in the same direction as first portion 22 and second portion 24. In addition, bosses 28 may be formed in portion 20 via any suitable manner, such as by stamping, for example. It is anticipated that bosses 28 may be formed as separate components and attached to portion 20 via any suitable manner, such as by welding, for example.

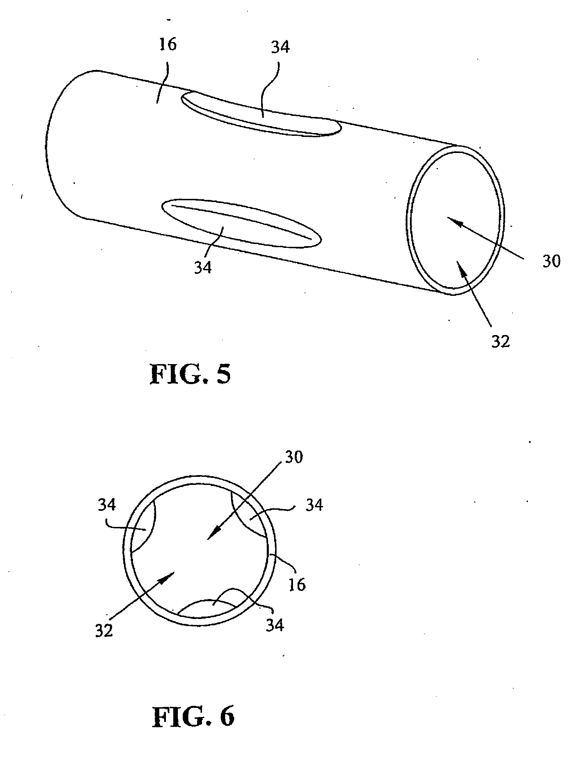

Figure 5 depicts a perspective view of a spacer 16. In the depicted embodiment, spacer 16 has a substantially cylindrical shape and includes a bore 30 extending along the longitudinal axis thereof. Spacer 16 may be formed from any suitable material, such as plastic, for example. Bore 30 extends the length of spacer 16 such that each end of spacer 16 includes an opening 32. Spacer 16 further includes a plurality of dimples or depressions, each indicated by numeral 34. In the depicted embodiment, openings 32 are sized and configured to receive bosses 28 (shown in Figure 4).

Figure 6 depicts an end view of spacer 16. In the depicted embodiment, spacer 16 includes a plurality of dimples, each indicated by numeral 34. As can be seen in Figure 6, each dimple 34 extends slightly into bore 30 and is positioned in the surface of spacer 16 at a position about the circumference of bore 30 located approximately 120° from the other dimples 34.

As shown in Figure 2, in the depicted embodiment, bolt assembly 18 includes bolt 40 and nut 42. Bolt 40 includes a threaded section 44, a head portion 46 and an intermediate portion 48. Threaded section 44 is configured to be received by nut 42 in a known manner.

In the depicted embodiment, threaded portion 44 and intermediate portion 48 are sized and configured to pass through both aperture 46 and opening 32 and be received in the area of bore 30 intermediate dimples 34. Head 46 is of sufficient size to prevent passage through aperture 26. Similarly, nut 42 is also of sufficient size to prevent passage of nut 42 through aperture 26.

As shown in Figure 2, in the depicted embodiment, first rail portion 12 and second rail portion 14 have complementary profiles. In addition, the apertures 26 that are formed within second rail portion 14 mirror the apertures 26 of first rail portion 12. Accordingly, in certain applications, first rail portion 12 and second rail portion 14 may have identical shapes and configurations, differing only with respect to positioning of each within the frame rail assembly 10.

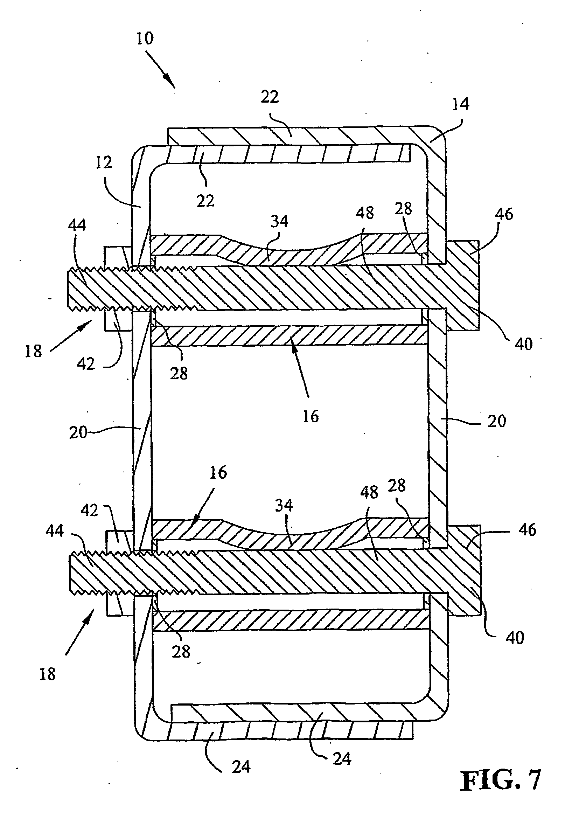

With the components of assembly 10 having been described, an exemplary description of the assembly process of assembly 10 will now be set forth with reference to Figures 1 through 7. It should be noted that the following description is for exemplary purposes only and relates to the embodiment depicted in the Figures. Other assembly processes may be utilized to assemble the assembly 10, as would be understood by one with skill in the art.

In the assembly process, spacers 16 may be placed upon the bosses 28 present within first rail portion 12. Bosses 28 may be sized for a "snug" fit with respect to the spacers 16. In the depicted embodiment, the "snug" fit utilizes friction to retain the spacers 16 on the bosses 28 during the assembly process.

With the spacers 16 having been placed upon the bosses 28 of first rail portion 12, second rail portion 14 may then be located on the spacers 16. Specifically, the bosses 28 of second rail portion 14 may be inserted into the corresponding spacers 16, thereby locating the spacers 16 intermediate first rail portion 12 and second rail portion 14. It should be noted that in the depicted embodiment, first portion 22 and second portion 24 of first rail portion 12 are located vertically below the corresponding first portion 22 and second portion 24 of second rail portion 14.

Once second rail portion 14 fully engages the spacers 16, the back portions 20 of the rail portions 12, 14 should both contact the ends of the spacers 16. Bolts 40 may then be inserted into the apertures 26 in a suitable manner. In the depicted embodiment, the presence of dimples 34 in the spacers 16 assist in the insertion of bolts 40 by centering the bolts 40 as the bolts 40 are inserted into the spacers 16. In the depicted embodiment, the bolts 40 each have a length sufficient to ensure that at least a portion of threaded portion 44 extends through the aperture 26 located at a position opposite head portion 46.

Once the bolts 40 have been fully inserted, the nuts 42 may then be threaded onto the bolts 40. The support provided by spacers 16 allows a user to thread nut 42 onto bolt 40 without damaging or deforming the rail portions 12, 14. Instead, the spacers 16 provide positive stops and prevent deformation of the rail portions 12, 14 even when nut 42 is fully tightened. If desired, first rail portion 12 and second rail portion 14 may be welded to one another in a suitable manner either prior to or following the tightening of nut 42 on bolt 40.

The frame rail assembly 10 may be used in a variety of applications wherein high strength and resistance to deformity are desirable. For example, frame rail 10 may be used in automotive applications as a vehicle frame for a car or truck. Also, it should be noted that the embodiment of frame rail 10 depicted in Figure 1 represents a substantially linear portion of the present invention. It should be understood that the rail portions 12, 14 may be modified so as to include linear and non-linear sections, thereby allowing the rail sections to be adapted for use in any desired application. For example, in embodiments of the invention, frame rail assembly 10 may include additional apertures configured to allow additional components (not shown) to be affixed to the frame rail assembly 10.

While this invention has been described as having an exemplary design, the present invention may be further modified within the spirit and scope of this disclosure. The application is, therefore, intended to cover any variations; uses, or adaptations of the invention using its general principles. Further, this application is intended to cover such departures from the present disclosure as come within known or customary practice in the art to which this invention pertains.

## Claims

1. A frame rail assembly (10) comprising a first rail portion (12) including at least one boss (28) and a second rail portion (14) including at least one boss (28), a spacer (16) disposed intermediate the first rail portion and the second rail portion and configured to receive the bosses of the rail portions **characterized in that** the spacer includes at least one dimple (34).

2. The frame rail assembly as set forth in claim 1 **characterized in that** the spacer includes three dimples (34) spaced equidistant apart.

3. The frame rail assembly as set forth in 1 or 2 **characterized by** a bolt assembly (18), wherein the first rail portion includes an aperture (26) encompassed by the boss and the second rail portion includes an aperture (26) encompassed by the boss, and at least a portion of the bolt assembly is received by the apertures and the spacer.

4. The frame rail assembly as set forth in one of claims 1 through 3 **characterized in that** the first rail portion includes a back portion (20), a first portion (22) and a second portion (24).

5. The frame rail assembly as set forth in one of claims 1 through 4 **characterized in that** the first rail portion and the second rail portion have substantially identical configurations.

6. The frame rail assembly as set forth in one of claims 1 through 5 **characterized in that** the bosses are sized and configured to retain the spacer with a frictional force.

## Patentansprüche

1. Längsträgeranordnung (10) mit einem ersten Trägerteil (12), das wenigstens einen Vorsprung (28) aufweist, und einem zweiten Trägerteil (14), das wenigstens einen Vorsprung (28) aufweist, wobei ein Abstandshalter (16) zwischen dem ersten Trägerteil und dem zweiten Trägerteil angeordnet und ausgebildet ist, die Vorsprünge der Trägerteile aufzunehmen, **dadurch gekennzeichnet, dass** der Abstandshalter wenigstens eine Vertiefung (34) aufweist.

2. Längsträgeranordnung nach Anspruch 1, **dadurch gekennzeichnet, dass** der Abstandshalter drei Vertiefungen (34) aufweist, die in gleichen Abständen voneinander beabstandet sind.

3. Längsträgeranordnung nach Anspruch 1 oder 2, **gekennzeichnet durch** eine Bolzenanordnung (18), wobei das erste Trägerteil eine Öffnung (26) aufweist, die von dem Vorsprung umgeben ist, und das zweite Trägerteil eine Öffnung (26) aufweist, die von dem Vorsprung umgeben ist, und wenigstens ein Bereich der Bolzenanordnung von den Öffnungen und dem Abstandshalter aufgenommen wird.

4. Längsträgeranordnung nach einem der Ansprüche 1 bis 3, **dadurch gekennzeichnet, dass** das erste Trägerteil einen hinteren Bereich (20), einen ersten Bereich (22) und einen zweiten Bereich (24) aufweist.

5. Längsträgeranordnung nach einem der Ansprüche 1 bis 4, **dadurch gekennzeichnet, dass** der erste Trägerbereich und der zweite Trägerbereich einen im Wesentlichen identischen Aufbau haben.

6. Längsträgeranordnung nach einem der Ansprüche 1 bis 5, **dadurch gekennzeichnet, dass** die Vorsprünge so dimensioniert und ausgebildet sind, dass sie den Abstandshalter mit einer Reibungskraft anhalten.

## Revendications

1. Assemblage de longeron de cadre de châssis (10) comprenant une première portion de longeron (12) englobant au moins un bossage (28) et une deuxième portion de longeron (14) englobant au moins un bossage (28), une entretoise (16) disposée entre la première portion de longeron et la deuxième portion de longeron et configurée pour que viennent s'y loger les bossages des portions de longeron, **caractérisé en ce que** l'entretoise englobe au moins une dépression (34).

2. Assemblage de longeron de cadre de châssis selon la revendication 1, **caractérisé en ce que** l'entretoise englobe trois dépressions équidistantes (34).

3. Assemblage de longeron de cadre de châssis selon la revendication 1 ou 2, **caractérisé par** un assemblage de boulons (18), la première portion de longeron englobant un orifice (26) que comprend le bossage et la deuxième portion de longeron englobe un orifice (26) que comprend le bossage, au moins une portion de l'assemblage de boulons venant se loger dans des orifices et dans l'entretoise.

4. Assemblage de longeron de cadre de châssis selon l'une quelconque des revendications 1 à 3, **caractérisé en ce que** la première portion de longeron englobe une portion arrière (20), une première portion (22) et deuxième portion (24).

5. Assemblage de longeron de cadre de châssis selon l'une quelconque des revendications 1 à 4, **caractérisé en ce que** la première portion de longeron et la deuxième portion de longeron possèdent des configurations essentiellement identiques.

6. Assemblage de longeron de cadre de châssis selon l'une quelconque des revendications 1 à 5, **caractérisé en ce que** les bossages sont dimensionnés et configurés pour retenir l'entretoise avec une force de friction.
